# DEMANDE DE BREVET EUROPEEN

(11) **EP 0 606 178 A1**
(43) Date de publication de la demande: **13.07.1994**
(21) Numéro de dépôt: 94400012.4
(22) Date de dépôt: 04.01.1994
(51) Int. Cl.: B29D 1/00, B29C 67/14, B29C 67/18, B29C 67/12

(54) **Procédé de réalisation d'un filetage sur une pièce, notamment une pièce en matériau composite et pièce filetée ainsi obtenue**

(30) Priorité: 05.01.1993 FR 9300017; 06.01.1993 FR 9300046
(71) Demandeur: ELECTRICITE DE FRANCE, F-75008 Paris (FR); SEPMA SA, F-68100 Mulhouse (FR)
(72) Inventeur: Emin, Michel, F-69003 Lyon (FR); Pilastre, André, F-69340 Francheville (FR); Baguet Michel, F-68260 Kingetsheim (FR)
(74) Mandataire: Schrimpf, Robert

(57) **Abrégé**

L'invention concerne un procédé de réalisation par surmoulage d'un filetage sur une surface d'apprêt (12) d'une pièce en matériau composite.

De façon caractéristique, le procédé comprend les étapes consistant à :
a) enduire de résine chargée l'une au moins de la surface d'apprêt (12) et d'une surface filetée (22) d'un conformateur (20), cette surface filetée présentant une forme complémentaire du filetage à réaliser sur la surface d'apprêt de ladite pièce, la pièce et le conformateur étant aptes à être introduits l'un dans l'autre jusqu'à ce que la surface d'apprêt et la surface filetée soient en regard,
b) introduire le conformateur et la pièce l'un dans l'autre jusqu'à positionner la surface d'apprêt en regard de ladite surface filetée,
c) éliminer le cas échéant les excès de résine débordant de l'espace compris entre les deux surfaces en regard,
d) polymériser la résine,
e) démouler par dévissage.

## Description

La présente invention concerne la réalisation d'un filetage sur une pièce, notamment une pièce en matériau composite.

Les matériaux composites, constitués de fibres imprégnées de résine, sont de plus en plus utilisés dans l'industrie, notamment pour réaliser des canalisations de transport de fluide car ces matériaux sont légers, offrent une bonne tenue mécanique et une excellente résistance à la corrosion. Toutefois, les pièces en matériau composite et plus particulièrement les canalisations en matériaux composites, contrairement aux pièces métalliques, ne peuvent être filetées ou taraudées directement par usinage, au risque d'endommager les fibres et d'obtenir un raccordement par vissage, avec un autre élément, de mauvaise qualité (tenue mécanique et étanchéité). Les pièces en matériau composite et plus particulièrement les canalisations en matériau composite sont ainsi pour l'essentiel assemblées par collage ou, lorsqu'un raccordement par vissage est indispensable, par l'intermédiaire de pièces filetées rapportées par collage sur la pièce ou canalisation.

La présente invention a pour objet un procédé de réalisation d'un filetage sur une pièce, notamment une pièce en matériau composite, présentant une surface d'apprêt sur laquelle on désire réaliser le filetage, qui permette d'obtenir des raccordements par vissage présentant une excellente tenue mécanique ainsi qu'une grande étanchéité.

Conformément à une première caractéristique, le procédé selon l'invention comprend les étapes consistant à :
a) enduire de résine chargée l'une au moins de ladite surface d'apprêt et d'une surface d'un conformateur présentant une forme complémentaire du filetage à réaliser sur ladite surface d'apprêt de ladite pièce, la pièce et le conformateur étant aptes à être introduits l'un dans l'autre jusqu'à ce que la surface d'apprêt et la surface filetée soient en regard,
b) introduire le conformateur et ladite pièce l'un dans l'autre jusqu'à positionner ladite surface d'apprêt en regard de la surface filetée du conformateur,
c) éliminer le cas échéant l'excès de résine débordant de l'espace compris entre les deux surfaces en regard,
d) polymériser la résine,
e) démouler par dévissage.

Avantageusement, les deux pièces présentent des surfaces transversales aptes à venir en butée axiale lorsque la surface d'apprêt de ladite pièce et la surface filetée du conformateur sont en regard l'une de l'autre.

La présente invention a également pour objet une pièce filetée, dont le filetage est réalisé par surmoulage, conformément à l'invention.

D'autres caractéristiques et avantages de la présente invention apparaîtront à la lecture de la description détaillée qui va suivre, non limitative de l'invention, et à l'examen du dessin annexé sur lequel :
- la figure 1 montre, de façon schématique et partielle, en coupe axiale, une pièce en matériau composite et un conformateur utilisé pour la réalisation d'un filetage sur cette pièce, conformément à l'invention,
- la figure 2 est une vue en coupe axiale, schématique et partielle, montrant le conformateur et la pièce en matériau composite introduits l'un dans l'autre,
- la figure 3 est une vue en coupe axiale, montrant la pièce en matériau composite et le filetage réalisé sur cette pièce, conformément à l'invention.

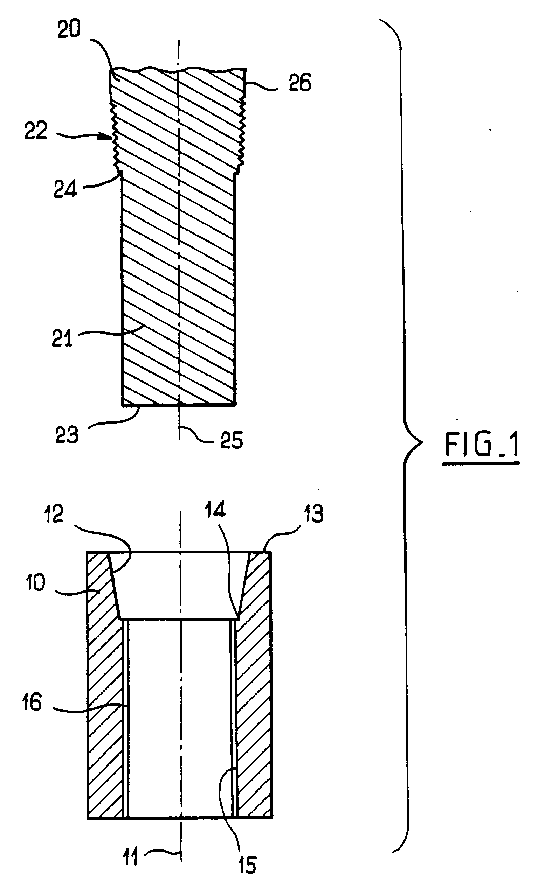

On a désigné par la référence 10 sur la figure 1 une pièce en matériau composite que l'on désire munir d'un filetage, conformément à l'invention. Il s'agit par exemple, comme représenté, d'un manchon 10 réalisé de façon connue en elle-même par enroulement filamentaire de fibres de verre imprégnées de résine. La description qui va suivre, qui n'est donnée qu'à titre d'exemple, concerne la réalisation d'un filetage conique, conformément au procédé selon l'invention, à l'intérieur du manchon 10. Bien entendu, le procédé selon la présente invention s'applique à la réalisation de tous types de filetages, cylindriques ou coniques par exemple, et qu'ils soient intérieurs ou extérieurs. Le manchon 10 est symétrique de révolution autour d'un axe 11 contenu dans le plan de coupe des figures et l'on a désigné par la référence 12 une partie de sa surface intérieure, appelée surface d'apprêt dans la suite, sur laquelle on désire réaliser le filetage intérieur conique. La surface d'apprêt 12 débouche à une extrémité axiale 13 du manchon 10 et s'étend de préférence, comme représenté, selon une surface conique tronquée, convergeant en éloignement de l'extrémité 13 et se raccordant, par un épaulement 14 faisant saillie radialement vers l'axe 11 du manchon 10, à une surface cylindrique 15, s'étendant sur le reste de la surface intérieure du manchon.

La surface 12 est réalisée par tous moyens appropriés connus de l'homme de l'art, par exemple par fraisage du manchon 10, initialement tubulaire, selon son axe 11 depuis l'extrémité 13. La surface interne cylindrique 15 est avantageusement recouverte, comme représenté sur les figures, d'un revêtement intérieur 16, connu en lui-même, destiné à améliorer l'étanchéité du manchon 10. Ce revêtement 15 est par exemple constitué d'une couche de résine époxyde.

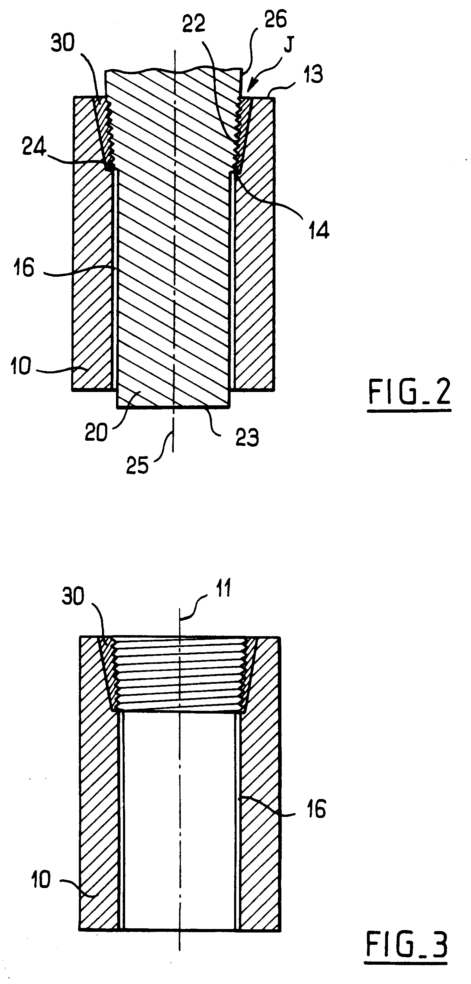

Conformément à l'invention, le filetage est réalisé par surmoulage sur le manchon 10, au moyen d'un conformateur 20 présentant une surface filetée 22 de forme complémentaire du filetage à réaliser sur le manchon. Plus particulièrement, le conformateur 20 présente une partie cylindrique 21 d'axe 25, de diamètre légèrement inférieur au diamètre interne du manchon 10, à introduire par une extrémité 23 dans l'extrémité 13 du manchon 10 et présente un épaulement 24 formant saillie radialement vers l'extérieur, apte à limiter l'introduction du conformateur 20 dans le manchon 10, par butée axiale sur l'épaulement 14 précité, comme représenté sur la figure 2.

La surface filetée 22 se situe au-delà de l'épaulement 24 en éloignement de l'extrémité 23, et le conformateur 20 se prolonge au-delà de la surface filetée 22, en éloignement de l'extrémité 23, pour former une partie 26 de support, liée par tous moyens appropriés, à des moyens de support et/ou d'entraînement du conformateur 20, connus en eux-mêmes et non représentés.

Pour réaliser le filetage, référencé 30, on commence de préférence par préchauffer le conformateur 20 et le manchon 10 dans une étuve, puis on applique sur l'une au moins de la surface filetée 22 du conformateur 20 et de la surface d'apprêt 12, de préférence les deux, une résine comprenant une charge minérale ou organique destinée à améliorer sa tenue mécanique. Le conformateur 20 enduit de résine chargée est introduit dans le manchon 10 par son extrémité 23 jusqu'à venir en butée axialement dans le manchon 10, par contact de l'épaulement 24 contre l'épaulement 14 du manchon précité. La mise en place du conformateur 20 et du manchon 10 l'un dans l'autre peut se faire par tous moyens appropriés, par exemple en fixant le conformateur 20 et en déplaçant le manchon 10. Le manchon 10 et le conformateur 20 sont enduits de préférence d'une quantité de résine chargée en excès, de telle sorte que lors de l'introduction du conformateur 20 dans le manchon 10, la résine remplisse de façon certaine tout l'espace compris entre les surfaces d'app rêt 12 et filetée 22 et déborde le cas échéant hors de cet espace. L'excès de résine débordant hors de l'espace précité est alors éliminé avant polymérisation de la résine. Avantageusement, l'ouverture du manchon 10 à l'extrémité 13 et la partie 26 du conformateur 20 ménagent un jeu J permettant aux microbulles d'air contenues dans la résine chargée de s'évacuer.

De préférence, la polymérisation de la résine est effectuée en deux étapes. Dans une première étape, on laisse gélifier la résine chargée à température ambiante puis dans une deuxième étape l'ensemble est chauffé à une température plus élevée, typiquement supérieure à 100°C, dont le choix dépend de la résine utilisée.

Ensuite, après polymérisation, on laisse refroidir jusqu'à température ambiante, et le conformateur 20 est retiré par dévissage. Bien entendu, on peut effectuer sur la pièce obtenue, munie de son filetage, tous travaux de finition connus de l'homme de l'art, notamment pour éliminer les bavures de moulage au niveau de l'extrémité 13 et de l'épaulement 14.

La résine chargée utilisée est choisie par l'homme de l'art en fonction notamment de la tenue mécanique et de la tenue en température souhaitée pour le filetage. Avantageusement, la résine est une résine époxyde, mélangée de préférence vingt-quatre heures avant utilisation, avec un durcisseur polyamine cycloaliphatique et avec des charges minérales. De préférence, on incorpore entre 50 et 70 % en masse de charge minérale, constituée avantageusement par des fibres de longueur inférieure à 1 mm et de diamètre maximal de 30 µm et par des microbilles de verre de diamètre maximal 50 µm.

Finalement, l'invention s'applique avantageusement à la réalisation de filetages sur des canalisations réalisées par enroulement filamentaire de fibres imprégnées de résine, mais aussi à la réalisation de filetages sur des canalisations en polychlorure de vinyle, des vannes ou des doigts de gant en fibres de carbone.

L'invention permet en outre de réaliser des filetages sur deux pièces constituées en des matériaux présentant des duretés différentes, de façon à s'affranchir des phénomènes d'usure qui apparaîtraient si les deux pièces étaient filetées directement par usinage et l'assemblage soumis à vibrations, le filetage de la pièce la plus dure endommageant alors le filetage de l'autre pièce.

## Revendications

**1/** Procédé de réalisation d'un filetage (30) sur une surface d'apprêt (12) d'une pièce (10), notamment une pièce en matériau composite, caractérisé en ce qu'il comprend les étapes consistant à :
a) enduire de résine chargée l'une au moins de la surface d'apprêt (12) et d'une surface filetée (22) d'un conformateur (20), cette surface filetée présentant une forme complémentaire du filetage à réaliser sur la surface d'apprêt de ladite pièce, la pièce et le conformateur étant aptes à être introduits l'un dans l'autre jusqu'à ce que la surface d'apprêt et la surface filetée soient en regard,
b) introduire le conformateur et la pièce l'un dans l'autre jusqu'à positionner la surface d'apprêt en regard de ladite surface filetée,
c) éliminer le cas échéant l'excès de résine débordant de l'espace compris entre les deux surfaces en regard,
d) polymériser la résine,
e) démouler par dévissage.

**2/** Procédé selon la revendication 1, caractérisé en ce que ladite résine chargée est une résine époxyde comportant une charge comprenant des fibres de longueur inférieure à 1 mm et de diamètre maximal 30 µm et des microbilles en verre de diamètre maximal 50 µm.

**3/** Procédé selon les revendications 1 et 2, caractérisé en ce que ladite charge est incorporée à la résine dans des proportions de 50 à 70 % en masse.

**4/** Procédé selon l'une des revendications 1 à 3, caractérisé en ce que ladite surface d'apprêt est conique et en ce que le filetage réalisé sur cette surface est conique.

**5/** Procédé selon l'une des revendications 1 à 4, caractérisé en ce que les deux pièces présentent des surfaces transversales (14, 24) aptes à venir en butée axiale lorsque la surface d'apprêt de ladite pièce et la surface filetée du conformateur sont en regard l'une de l'autre.

**6/** Procédé selon l'une des revendications 1 à 5, caractérisé en ce que la polymérisation de la résine comprend les étapes consistant à laisser gélifier à température ambiante puis à polymériser à une température plus élevée.

**7/** Pièce, notamment pièce en matériau composite, caractérisée en ce qu'elle comporte un filetage (30) réalisé par surmoulage.

**8/** Pièce selon la revendication 7, caractérisée en ce que le filetage est réalisé dans une résine époxyde chargée.
